(19) **Europäisches Patentamt**
**European Patent Office**
**Office européen des brevets**

(11) **EP 2 554 528 B1**

(12) **EUROPEAN PATENT SPECIFICATION**

(45) Date of publication and mention
of the grant of the patent:
**07.08.2019 Bulletin 2019/32**

(21) Application number: **11762478.3**

(22) Date of filing: **04.03.2011**

(51) Int Cl.:
*C05G 3/00* *(2006.01)*     *A01N 25/00* *(2006.01)*
*A01N 25/26* *(2006.01)*     *A01P 3/00* *(2006.01)*
*A01P 7/00* *(2006.01)*     *A01P 11/00* *(2006.01)*
*A01P 13/00* *(2006.01)*     *A01P 21/00* *(2006.01)*
*B01J 2/00* *(2006.01)*

(86) International application number:
**PCT/JP2011/055019**

(87) International publication number:
**WO 2011/122238 (06.10.2011 Gazette 2011/40)**

(54) **Coated granular material and method for producing coated granular material**

Beschichtetes Granularmaterial und Verfahren zur Herstellung des beschichteten Granularmaterials

Matériau granulaire enrobé et procédé de production du matériau granulaire enrobé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2011 JP 2011026782**
         **31.03.2010 JP 2010081365**

(43) Date of publication of application:
**06.02.2013 Bulletin 2013/06**

(73) Proprietor: **Central Glass Company, Limited**
**Yamaguchi 755-0001 (JP)**

(72) Inventors:
• **FUJII, Hiroyuki**
**Ube-shi**
**Yamaguchi 755-0001 (JP)**
• **OKADA, Nobuhiro**
**Ube-shi**
**Yamaguchi 755-0001 (JP)**
• **SUETA, Hideaki**
**Ube-shi**
**Yamaguchi 755-0001 (JP)**

• **TANAKA, Tadashi**
**Ube-shi**
**Yamaguchi 755-0001 (JP)**
• **MORITA, Kazuyoshi**
**Ube-shi**
**Yamaguchi 755-0001 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 0 847 691**      **EP-A2- 0 867 422**
**AU-B2- 695 280**      **AU-B2- 704 560**
**JP-A- 2003 277 178**    **JP-A- 2003 277 178**
**JP-A- 2005 001 957**    **JP-A- 2005 041 708**
**JP-A- 2005 041 708**    **JP-A- 2007 277 429**
**JP-A- 2008 074 809**    **JP-A- 2008 074 810**
**US-A1- 2003 033 843**   **US-B1- 6 358 295**

**Description**

<u>Technical Field</u>

The present invention relates to a coated granular material in which a water-soluble granular substance is coated with a thermosetting resin and to a method for producing the coated granular material.

<u>Background Art</u>

There has recently been a demand for more labor-saving, more efficient fertilizers and pesticides and usages thereof in terms of the environmental effects of release components from granular fertilizers and granular pesticides, the need for labor savings in response to the aging of agricultural workers and the like. Against such a backdrop, various modified-release fertilizers and pesticides have been proposed and put into actual use.

The modified-release fertilizers and pesticides are coated granular materials in which granular fertilizers and pesticides are surface coated with organic or inorganic water-permeable coatings so as to control the release of internal components from the granular fertilizers and pesticides. Among others, the coated granular materials with organic coatings such as resin coatings exhibit more excellent release control functions. These types of coated granular materials have been the mainstream of coated fertilizers and pesticides.

Various kinds of resins are used as the coatings. In particular, thermosetting resins such as urethane resins are widely used as coating resins for the reasons that these resins have high coating strength and high water resistance, enable easy control of release characteristics and can be applied without using solvents. The present applicant has already disclosed, in Patent Document 1, a coated granular fertilizer having a surface coated with a coating of polyurethane resin that is obtained by curing (A) an isocyanate-terminal prepolymer prepared from an aromatic polyisocyanate and a castor oil or castor oil-derived polyol with (B) a castor oil or castor oil-derived polyol and (C) an amine polyol.

The coated granular materials such as coated water-soluble granular fertilizers and pesticides have various release patterns, such as long-term release pattern, short-term release pattern and sigmoid release pattern, according to the release control periods and release characteristics of the coatings. It has been demanded to finely modify the release pattern of the coated granular material depending on the purpose of use of the coated granular material.

For example, Patent Document 2 discloses a coated granular fertilizer material having a coating of polyurethane formed by reaction of a hardened castor oil and a polyisocyanate on a granular fertilizer or a hydrophobic compound-coated granular fertilizer, wherein the equivalent ratio of isocyanate groups originated from the polyisocyanate to hydroxyl groups originated from the hardened castor oil is adjusted to 0.33 to 0.9 during the reaction of the hardened castor oil and the polyisocyanate. The use of such a coated granular fertilizer material favorably leads to delayed release of fertilizer components.

Patent Document 3 discloses an early-release coated granular plant activating material having a coating of urethane resin formed, using a polyol containing an alkylene oxide adduct of polycaprolactone, on a granular plant activating agent so as to control the early release of plant activating components from the coated granular plant activating material.

Patent Document 4 discloses a coated granular fertilizer material having a thermally cured thermosetting resin coating, wherein the resin coating is formed from a combination of two or more kinds of thermosetting resins of different hydrophilicity so as to easily and precisely control the release pattern of fertilizer components by selecting the combination of the resins of different hydrophilicity.

On the other hand, there are defect problems such as occurrence of pinholes in the coating and poor formation of the coating during the process of production of the coated granular material by the use of the thermosetting resin. In order to solve the above defect problems and obtain the suitable release performance of the coating, it is conceivable to laminate a plurality of coating layers together.

For example, Patent Document 5 discloses a process for production of a coated granular fertilizer material with a coating of thermosetting resin, including: (1) holding a granular fertilizer in a rolling state; (2) adding a liquid, uncured thermosetting resin in such an amount as to form a coating layer with a thickness of 1 to 10 μm to the granular fertilizer in the rolling state; (3) coating particle surfaces of the granular fertilizer with the uncured thermosetting resin while maintaining the granular fertilizer in the rolling state; (4) thermally curing the uncured thermosetting resin while maintaining the granular fertilizer in the rolling state; and (5) repeating one or more cycles of the above steps (1) to (4), in order of (1) to (5). It is described in this document that the thickness of the coating layer needs be adjusted to 10 μm or less for the reason that, when a plurality of fertilizer particles are adhered together by the resin with increase in the adhesion properties of the resin, the resulting particle aggregate could cause damage to the resin surface. Further, the coating thickness of the granular fertilizer material becomes increased by the repeated addition of small amounts of coating resin in the above production process.

Prior Art Documents

Patent Documents

Patent Document 1: Japanese Laid-Open Patent Publication No. H10-265288
Patent Document 2: Japanese Laid-Open Patent Publication No. 2005-041708
Patent Document 3: Japanese Laid-Open Patent Publication No. 2007-277429
Patent Document 4: Japanese Laid-Open Patent Publication No. H9-208355
Patent Document 5: Japanese Laid-Open Patent Publication No. H9-202683

JP 2005-041708 A relates to a granular coated fertilizer in which a granular fertilizer or a granular fertilizer coated with a hydrophobic compound is coated with a polyurethane coating formed by reacting hardened castor oil and a polyisocyanate component, Granular coated fertilizer having an equivalent ratio of NCO group derived from the polyisocyanate component to OH group derived from hardened castor oil of 0.33 to 0.9 in the reaction of hardened castor oil and polyisocyanate component and a method for producing the same. US 6,358,295 B1 relates to a method for producing controlled-release granular fertilizer coated with urethane which comprises adding water-absorptive polymer to granular fertilizer and then coating it with at least one urethane resin layer. The obtained fertilizer comprises few fine particles coated only the water-absorptive polymer, gives few floats when applied in water, and releases fertilizer ingredient in a short time at room temperature or even at lower temperature. The method comprises, in order, the following steps of:(1) adding a water-absorptive polymer to a granular fertilizer; (2) placing the granular fertilizer in a tumbled state; (3) adding liquid uncured urethane resin to the tumbled granular fertilizer in an amount enough to secure a layer thickness of 1 to 10 $\mu$m; (4) coating the surface of each granular fertilizer in the uncured urethane resin while keeping the granular fertilizer in the tumbled state; (5) curing thermally the urethane resin while keeping the granular fertilizer in the tumbled state to form a urethane resin layer; and (6) repeating the above steps (2) to (5) one or more times, in this order.
EP 0 867 422 A2 describes a coated granular fertilizer having a film covering fertilizer granules. This film comprises a polyurethane resin prepared by a method comprising the steps of (a) reacting an aromatic polyisocyanate with a first polyol component (i.e., castor oil or a castor oil derivative), thereby to obtain a prepolymer having terminal isocyanate groups in the molecule; and (b) reacting the prepolymer with a second polyol component (i.e., castor oil or a castor oil derivative) and a third polyol component which is an amine having at least two hydroxyl groups in the molecule, thereby to cure the prepolymer and thus to prepare the polyurethane resin.
JP 2003-277178 A relates to a multilayered coated granular fertilizer which is formed by subjecting the surface of a granular fertilizer to primary coating with a reactant obtained by reacting castor oil and a polyisocyanate at a molar ratio of an isocyanate group/hydroxy group ranging from 0.7 to 3.0, subjecting the surface of the fertilizer to secondary coating with a reactant obtained by reacting an alkyd resin and the polyisocyanate at a molar ratio of the isocyanate group/hydroxy group ranging from 0.7 to 3.0.
AU 704560 B2 describes a granular fertiliser coated with a thermosetting resin that is thermally set, wherein said coating resin comprises a combination of two or more thermosetting resins having different hydrophilic properties, and a coated fertiliser comprising a granular fertiliser having a surface coated with a thermosetting resin film containing dispersed powder that is insoluble or sparingly soluble in water.
AU 695280 B2 discloses a method for producing a granular coated fertilizer coated with a thermosetting resin, which is characterized by the following steps carried out in the order: (1) Granular fertilizer is kept in rolling state. (2) An uncured liquid thermosetting resin is added in an amount to provide 1-10 $\mu$m layer thickness coated onto the granular fertilizer kept in the rolling state. (3) The surface of each fertilizer granule is coated with the uncured thermosetting resin while keeping the rolling state. (4) The uncured thermosetting resin is cured while keeping the rolling state of the granular fertilizer. (5) Steps from the step (1) to the step (4) are further repeated for one or more times.
US 2003/033843 A1 describes a granular fertilizer which is coated with at least 3 layers: 1) a thermosetting resin layer (first thermosetting resin layer), 2) a water-insoluble material layer and 3) a thermosetting resin layer (second thermosetting resin layer) from inner to outer layers.
EP 0 847 691 A1 relates to a granular pesticidal composition coated with a thermosetting resin. examples of the thermosetting resin used in the present invention include polyurethane resins, epoxy resins, unsaturated polyester resins, phenol resins, urea • melamine resins, silicone resins and the like.

## Summary of the Invention

### Problems to be Solved by the Invention

As mentioned above, there has been a demand to finely modify the release control periods of the modified-release fertilizers and pesticides. It is particularly demanded for the modified-release fertilizers and pesticides to limit the release of the components soon after the application (hereinafter sometimes also referred to as "initial release") and allow 80 mass% or more of the components to be released during a given time period (e.g. 10 to 200 days) after the application.

However, there is difficulty in achieving such a short-term release pattern to allow 80 mass% or more of the release components to be released during a short time period (e.g. 10 to 100 days). It is conventionally known to decrease the thickness of the coating and to increase the hydroxyl group equivalent of the coating as the techniques for the coated granular material to achieve the short-term release pattern. In the above techniques, however, defects are likely to occur in the coating. This results in a problem that the initial release limiting function of the coating becomes insufficient due to increase in the water permeability of the coating.

In order to prevent the occurrence of defects in the coating, widely used is a coating technique for forming a coating with 10 or more thin coating layers of thermosetting resin. In the above coating technique, thermal curing treatment needs to be performed on each thin coating layer during the formation of the coating. This results in problems such as increase in production time and deterioration in productivity. Further, the short-term release pattern is difficult to achieve due to the lamination of the thin coating layers in the coating.

In this way, it has been difficult for the coated granular material to attain three requirements: a short-term release pattern, an initial release limiting function and good quality by the above conventional techniques.

It is therefore an object of the present invention to provide a coated granular material capable of achieving both of a short-term release pattern and an initial release limiting function and maintaining good quality.

### Means for Solving the Problems

As a result of extensive researches, the present inventors have found that it is possible by forming a protection layer on a coating layer of a coated granular material to prevent defects occurring during production process as mentioned above. The present inventors have also found, as a result of further researches, that it is possible to control the initial release from the coated granular material by setting a suitable ratio of isocyanate groups and hydroxyl groups in the protection layer. The present invention is based on these findings.

Namely, the present invention provides a coated granular material according to claim 1, comprising: a water-soluble granular substance; a coating layer applied to at least a surface of the water-soluble granular substance and a protection layer applied to the coating layer, characterized in that the coating layer comprises a thermosetting resin A formed from a resin liquid having a molar ratio A of isocyanate groups to hydroxyl groups of 0.5 to 0.9; the protection layer comprises a thermosetting resin B formed from a resin liquid having a molar ratio B of isocyanate groups to hydroxyl groups of 0.75 to 2.0; the thermosetting resin of the coating layer and the thermosetting resin of the protection layer contain the same components at different mixing ratios such that the molar ratio B of the protection layer is greater than the molar ratio A of the coating layer and a difference between the molar ratio A and the molar ratio B is 0.1 or more.

The present invention also provides a method for producing the coated granular material according to claim 7, comprising: holding a water-soluble granular substance in a flow state or rolling state; applying a coating resin to the water-soluble granular substance in the flow state or rolling state; forming an uncured coating layer of the coating resin on a surface of the water-soluble granular substance; forming a protection layer on a surface of the uncured coating layer; and thermally curing the uncured coating layer and protection layer.

### Detailed Description of the Embodiments

Hereinafter, the present invention will be described below in detail.

#### 1. Coated Granular Material

A coated granular material according to the present invention includes: a water-soluble granular substance; a coating layer applied to at least a surface of the water-soluble granular substance and a protection layer applied to the coating layer, characterized in that the coating layer comprises a thermosetting resin A formed from a resin liquid having a molar ratio A of isocyanate groups to hydroxyl groups of 0.5 to 0.9; the protection layer comprises a thermosetting resin B formed from a resin liquid having a molar ratio B of isocyanate groups to hydroxyl groups of 0.75 to 2.0; the thermosetting resin of the coating layer and the thermosetting resin of the protection layer contain the same components at different mixing ratios such that the molar ratio B of the protection layer is greater than the molar ratio A of the coating layer and a difference between the molar ratio A and the molar ratio B is 0.1 or more.

When the coated granular material is immersed in water, the water permeates through the coating, enters into the coated granular material and dissolves internal release components of the water-permeable granular substance. The dissolved release components permeate through the coating toward the outside of the coating. At this time, the coating limits the permeation of the water and the release components. When the coating becomes unable to limit such permeation, breakage occurs in the coating so that the release components are released to the outside of the coating.

In the coated granular material of the present invention, the coating layer is formed as a uniform coating film on the surface of the water-soluble granular substance. It is possible to control the release time of the components by the formation of such a coating layer on the water-soluble granular substance. The cross-linking density of the thermosetting resin A of the coating layer is lowered to obtain an improvement in water permeability so that the coated granular material can achieve a short-term release pattern when the molar ratio A of the resin liquid of the coating layer according to the invention is set to 0.5 to 0.90, during the formation of the coating layer. If the molar ratio A is smaller than 0.5, it may be difficult to coat the water-soluble granular substance due to insufficient cross-linking of the thermosetting resin A. If the molar ratio A exceeds 0.99, the short-term release pattern may be difficult to achieve.

Further, it is possible to prevent the occurrence of defects during production process by the formation of the protection layer on the surface of the coating layer in the coated granular material of the present invention. During the formation of the protection layer, the isocyanate groups contained in the resin liquid of the protection layer react with the unreacted hydroxyl groups contained in the resin liquid of the adjacent coating layer. The cross-linking density of the protection layer is lowered if there are not sufficient isocyanate groups in the resin liquid of the protection layer. It is thus necessary to control the molar ratio B of the resin liquid of the protection layer to be greater than the molar ratio A of the resin liquid of the coating layer. When the molar ratio B of the resin liquid of the protection layer is set to 0.75 to 2.0, preferably 0.8 to 1.5, the cross-linking density of the thermosetting resin B of the protection layer is increased so as to limit the initial release of the components. If the molar ratio B is smaller than 0.75, the initial release of the components may not be limited sufficiently. If the molar ratio B exceeds 2.0, the cross-linking of the isocyanate groups and hydroxyl groups may become insufficient.

According to the invention the difference between the molar ratio A and the molar ratio B is 0.1 or more. If the difference between the molar ratio A and the molar ratio B is less than 0.1, the thermosetting resin B may not exhibit a sufficient protection layer function to protect the coating layer. Further, it may be difficult to control the release rate of the components of the water-soluble granular substance in the initial release stage. Preferably, the difference between the molar ratio A and the molar ratio B is 0.15 or more. When the molar ratio difference is in the above range, it is possible to easily control the component release rate in the initial release stage.

In the coated granular material of the present invention, the coverage rate of the protection layer, as determined by the equation: (mass of protection layer/mass of coated granular material)$\times$100, is preferably in a range of 0.2 to 2 mass%. If the coverage rate of the protection layer is smaller than 0.2 mass%, it may be difficult for the protection layer to protect the coating layer due to its small thickness. If the coverage rate of the protection layer exceeds 2 mass%, the release pattern of the coated granular material may be impaired. The coverage rate of the protection layer may preferably be set to 0.4 mass% or greater.

Furthermore, it is preferable that the molar ratio of the total isocyanate groups to the total hydroxyl groups in the resin liquids of the thermosetting resins A and B is in a range of 0.6 to 1.2. If the total molar ratio is smaller than 0.6 or exceeds 1.2, it may be difficult to control the release rate of the components of the water-soluble granular substance due to insufficient cross-linking of the coating film.

(a) Water-soluble Granular Substance

There is no particular limitation on the kind of the water-soluble granular substance as long as the water-soluble granular substance is soluble in water. Depending on the purpose of use of the coated granular material, there can suitably be used a water-soluble fertilizer, a water-soluble pesticide or the like. Preferably, the water-soluble granular substance has a particle size of 1 to 10 mm.

(b) Coating Layer

The coating layer is formed by applying the hydrophobic thermosetting resin onto the surface of the water-soluble granular substance. Although the coating layer can be formed as a single layer, it is preferable to laminate two or more coating layers when the coating film is large in thickness. In this case, the thicknesses of the respective coating layers may be different within the range that does not impair the release performance of the coating film. The constituents of the respective coating layers may also be different.

Preferably, the coating layer contains a water-absorbing resin. The water-absorbing resin expands by absorption of water permeating through the coating layer so as to help breakage of the coating layer and the protection layer. It is possible to control the component release time more finely by the use of such a water-absorbing resin. The water-absorbing resin is more preferably contained in any one or ones of the coating layers located apart from the protection layer and particularly preferably in the coating layer located adjacent to the water-soluble granular substance. The water-absorbing resin may be contained in the surface of the water-soluble granular substance.

In the case where the water-absorbing resin is contained in the coating layer, it is preferable to form two or more coating layers: at least one of which contains the water-soluble resin and the remaining one or ones of which does not contain the water-soluble resin. It is more preferable that the coating layer without the water-absorbing resin is located above the coating layer with the water-absorbing resin.

The coverage rate of the coating layer, as determined by the equation: (mass of one coating layer/mass of coated granular material)×100, is preferably in a range of 0.5 to 5 mass%, more preferably 0.5 to 3 mass%. If the coverage rate of the coating layer is smaller than 0.5 mass%, it may be difficult to attain the desired release performance of the coating layer. If the coverage rate of the coating layer exceeds 5 mass%, it is difficult to form the coating layer uniformly due to its large thickness so that the components of the water-soluble granular substance may not be released in the desired release pattern.

A typical example of the thermosetting resin A is an urethane resin obtained from an aromatic polyisocyanate(s), a polyol(s) and an amine compound(s) or amine polyol(s). That is to say that, in the coating resin A for formation of the coating layer, the resin liquid containing an aromatic polyisocyanate(s), a polyol(s) and an amine compound(s) is used to form an urethane bond by reaction of the resin liquid.

The coating resin A preferably has a low viscosity in order to coat the surface of the granular substance uniformly with the coating resin A. For example, it is preferable to set the viscosity of the coating resin A to 0.1 to 200 mPa·s at a coating temperature.

Examples of the aromatic polyisocyanate are: tolylene diisocyanate (TDI); diphenylmethane diisocyanate (MDI); naphthalene diisocyanate; polyphenylpolymethylene polyisocyanate; phenylene diisocyanate; xylylene diisocyanate; tetramethylxylene diisocyanate; and modified products thereof, such as urea-modified products, dimers, trimers, carbodiimidated products, allophanate-modified products and buret-modified products. These aromatic polyisocyanate compounds may be used in combination of two or more thereof. An industrially-applicable, so-called "crude" polyisocyanate is also usable. Among others, MDI, crude MDI, carbodiimidated MDI (liquid MDI), TDI and crude TDI are particularly suitably used.

Further, there can be used isocyanate-terminal prepolymer prepared from the above aromatic polyisocyanate compound. It is feasible to prepare the isocyanate-terminal prepolymer by any known process, e.g., by reacting the aromatic polyisocyanate at 30 to 130°C, preferably 40 to 90°C, for 1 to 5 hours in a condition that the equivalent ratio of isocyanate groups originated from the polyisocyanate to active hydroxyl groups originated from the polyol is 1.1 to 50.0, preferably 1.2 to 25.0. The thus-prepared MDI, when used as the isocyanate-terminal prepolymer, shows good compatibility with the other components and provides effects such as reaction speedup, viscosity adjustment for workability improvement and the like.

Examples of the polyol are: a castor oil and derivatives thereof (such as castor oil, alkylene oxide adducts of castor oil and polyalcohol-modified products of castor fatty acids); alkylene oxide adducts of low-molecular-weight polyfunctional alcohols (such as monoadduct or coadduct of propylene oxide, butylenes oxide or styrene oxide and diol, triol, hexaol, glycerin or trimethylolpropane); alkylene oxide adducts of low-molecular-weight polyfunctional carboxylic acids (such as monoadduct or coadduct of propylene oxide, butylenes oxide or styrene oxide and dodecanedioic acid); alkylene oxide adducts of low-molecular-weight polyfunctional polyesters (such as monoadduct or coadduct of propylene oxide, butylenes oxide or styrene oxide and polyester of glycerin and dodecanedioic acid); and mixtures of two or more kinds thereof. Among others, a castor oil, a derivative obtained by ester interchange of castor oil by ethylene glycol or propylene glycol, polyoxyethylene triol and polyoxypropylene triol may suitably be used.

As the amine compound, there can be used an alkyl amine or an amine polyol. Examples of the alkyl amine include trimethylamine, triethylamine, dimethylethylamine and dimethylisopropylamine. The amine polyol is preferably used as the amine compound. Examples of the amine polyols are low-molecular-weight amine polyols such as di- or tri-ethanolamine and N-methyl-N,N'-diethanolamine and amine polyols obtained by addition of alkylene oxide e.g. propylene oxide (PO) or ethylene oxide (EO) to amino compounds e.g. ethylenediamine, 1,3-propanediamine, 1,6-hexanediamine. In the addition of the alkylene oxide to the amino compound, the addition ratio is not particularly limited and is generally set in such a manner that the number of alkylene oxide molecules added is 1 to 200, preferably 1 to 50, per 1 nitrogen atom. Particularly preferred are those in which the number of alkylene oxide molecules added is of the order of 2 to 2.4 per 1 nitrogen atom in order to adjust the properties relating to the water permeability of the coating film. Specific examples of such an amine polyol compound are N,N,N',N'-tetrakis(2-hydroxypropyl)ethylenediamine, N,N,N',N'-tetrakis(2-hydroxyethyl)ethylenediamine, N,N,N',N'-tetrakis(2-hydroxypropyl)-1,3-propanediamine and N,N,N',N'-tetrakis(2-hydroxyethyl)-1,6-hexanediamine. In terms of good reactivity and properties, it is particularly preferable to use N,N,N',N'-tetrakis(2-hydroxypropyl)ethylenediamine, N,N,N',N'-tetrakis(2-hydroxyethyl)ethylenediamine, or either of oxypropylated ethylenediamine and oxyethylated ethylenediamine prepared using these amine polyol compounds as the main components.

The amine polyol is suitably be used as the polyol component because the amine polyol shows good compatibility in the resin composition so that the resin composition can be formed into the uniform coating film. Further, the amine polyol can favorably accelerate the reaction and serve as a cross-linking agent and as a chain extension agent so as to obtain good curing properties and strong coating film properties.

It suffices to adjust the amount of the amine polyol used in such a manner that the coating resin A can be applied uniformly and then subjected to cross-linking reaction. In general, the amount of the amine polyol used is set to 0.1 to 50 mass% based on the mass of the urethane resin so as to adjust the curing rate of the coating resin.

The water-absorbing resin refers to resin that is capable of expanding to become 5 times or more larger than its dry volume by absorption of a large amount of water and shows water absorbing characteristics by itself or contains a water-absorbing substance. Particularly preferred are those having a low solubility and forming a gel during water absorption. Specific examples of such a water-absorbing resin are: acrylate polymers (e.g. available under the trade name of "Sumika Gel S-series, L-series and R-series" from Sumitomo Chemical Co., Ltd., "Aquakeep 10SH, 10SHP, 10SH-NF(20) and SA60NTYPE2" from Sumitomo Seika Chemicals Co., Ltd., "Aquamate AQ-200 and AQ-200B-02" from Sekisui Plastics Co., Ltd., "Sanfresh ST-250MPS and ST-500MPSA" from Sanyo Chemical Industries Ltd.); isobutylene polymers (e.g. available from KI Gel 201K, KI Gel-201K-F2, KI Gel Solution System and KI Gel Compound" from Kuraray Co., Ltd.); acrylic acid-vinyl alcohol copolymers; polyethylene oxide-modified resins; starch graft copolymers; starches (such as potato starch, corn starch, sweet potato starch and soluble starch); carboxymethylcellulose (CMC); CMC metal salts; and bentonite. Among others, acrylate polymers, isobutylene polymers and starches are preferred. Particularly preferred are acrylate polymers.

Preferably, the water-absorbing resin has a particle size of 1 to 100 $\mu$m, more preferably 2 to 50 $\mu$m. If the particle size of the water-absorbing resin is less than 1 $\mu$m, there are little changes of the release time and release rate due to the addition of the water-absorbing resin. It is not effective to modify the release characteristics of the coating layer by the use of such small water-absorbing resin particles. If the particle size of the water-absorbing resin exceeds 100 $\mu$m, the coating layer may not be formed uniformly. It becomes thus likely that defects will occur in the coating film.

The amount of the water-absorbing resin used varies depending on the particle size, but generally ranges from 0.1 to 30 mass%, preferably 0.5 to 20 mass%, more preferably 1 to 10 mass%, based on the total mass of the urethane resin and the water-absorbing resin. If the amount of the water-absorbing resin is less than 0.1 mass%, there are little changes of the release time and release rate due to the addition of the water-absorbing resin. It is not effective to modify the release characteristics of the coating layer by the addition of such a small amount of the water-absorbing resin. If the amount of the water-absorbing resin exceeds 30 mass%, it may become difficult to control the release start time due to increase in the hydrophilicity of the coating layer.

It is herein preferable to mix and disperse the water-absorbing resin with the polyol component and, immediately after mixing the resulting dispersion liquid with the polyisocyanate component, add the mixed resin liquid to the water-soluble granular substance, or to add the water-absorbing resin, the polyol component and the polyisocyanate component independently to the water-soluble granular substance in coating equipment.

In addition to the water-absorbing resin, the coating resin A may contain an organic or inorganic additive as long as the additive does not substantially impair the properties of the coating layer. Examples of the additive are alkyd resins, urethane resins, fatty esters, rosin and derivatives thereof, ester gums, surfactants, petroleum resins, talc, diatomaceous earth, silica, urea and sulfur powder. The additive is added in an amount of 0.1 to 50 parts by mass per 100 parts by mass of the urethane resin in the present invention. It is possible to control the workability and release characteristics of the coating layer by selecting the kind and amount of the additive(s) used.

As mentioned above, the coating resin A has an urethane bond formed by reaction of the aromatic polyisocyanate with the polyol and the amine compound. In order to promote such urethane bond formation, a catalyst may be added. An organic metal catalyst such as dibutyl tin laurate or lead octoate is usable as the catalyst.

The coating resin A may further contain vegetable oil. During the reaction of the polyol and the polyisocyanate, the vegetable oil is an unreactive component but serves as a sort of space so as to loosen the three-dimensional structure of the urethane resin. It is possible by the addition of such vegetable oil to facilitate permeation of water into the space of the urethane resin and change the water resistance of the urethane resin. It is also possible to decrease the adhesion properties of the urethane resin during the curing and thereby decrease the thickness of the coating layer.

Examples of the vegetable oil are coconut oil, corn oil, cotton oil, olive oil, palm oil, peanut oil, rapeseed oil, canola oil, safflower oil, sesame oil, soybean oil, sunflower oil, linseed oil, tall oil, and mixtures thereof. Among others, vegetable oils having a high oleic acid or linoleic acid content (such as rapeseed oil, canola oil and soybean oil) are preferred. Particularly preferred are rapeseed oil and canola oil. A part or the whole of the vegetable oil may be placed with triglyceride of fatty acid. Examples of the fatty acid are capric acid, lauric acid, myristic acid, palmitic acid, stearic acid, arachidic acid, behenic acid, oleic acid, erucic acid, linoleic acid, linolenic acid and ricinoleic acid.

The amount of the vegetable oil used varies depending on the particle size, but generally preferably ranges

**EP 2 554 528 B1**

from 0.1 to 50 mass%, more preferably 0.1 to 30 mass%, still more preferably 0.1 to 15 mass%, based on the total mass of the urethane resin and the vegetable oil. If the amount of the vegetable oil is less than 0.1 mass%, there cannot be obtained a sufficient effect by the addition of the vegetable oil. If the amount of the vegetable oil exceeds 50 mass%, it becomes impossible to form the strong coating film due to insufficient cross linking of the coating resin A and becomes difficult to form the coating film uniformly due to adhesion of the vegetable oil to the coating equipment during the formation of the coating film. Although the vegetable oil can be added solely, it is preferable to add the vegetable oil in the form of a uniform liquid mixed with the polyisocyanate component or polyol component.

(c) Protection Layer

The protection layer is formed by applying the hydrophobic thermosetting resin onto the surface of the coating layer. It is feasible to provide a single protection layer or to laminate two or more protection layers. In the case where the protection layers are laminated together, the constituents of the respective protection layers may be different.

A typical example of the thermosetting resin B is an urethane resin obtained from an aromatic polyisocyanate(s), a polyol compound(s) and an amine compound(s) or amine polyol(s). That is to say that, in the coating resin B for formation of the protection layer, the resin liquid containing an aromatic polyisocyanate(s), a polyol compound(s) and an amine compound(s) is used to form an urethane bond by reaction of the resin liquid.

The aromatic isocyanate, polyol and amine compounds of the urethane resin of the protection layer are the same as those of the coating layer. By the use of the same raw materials, it is possible to prepare the coating resin of the protection layer in the same equipment as that of the coating layer with no need to change the coating resin. Further, the coating resin B may contain an organic or inorganic additive, an organic metal catalyst and/or vegetable oil as in the case of the coating resin A.

In particular, the vegetable oil is preferably added for the reason that it is possible by the addition of the vegetable oil to the protection layer to decrease the adhesion properties of the protection layer, reduce the occurrence of damages caused by adhesion of the protection layer and damages caused by separation or wear of the protection layer due to adhesion or contact of the protection layer with flow- or rolling-state maintaining equipment and thereby decrease the thickness of the protection layer.

In order to prevent adhesion between the particles of the coated granular material, it is feasible to treat a surface of the protection layer with inorganic powder. Examples of the inorganic powder are powders of talc, sulfur, calcium carbonate, silica, zeolite, diatomaceous earth, clay and metal oxide. These powders can be used solely or in the form of a mixture thereof. For ease of handling, talc is preferably used.

The amount of the inorganic powder used is preferably 0.1 to 15 mass%, more preferably 1 to 10 mass%, based on the total mass of the coating and the protection layer. If the amount of the inorganic powder is less than 0.1 mass%, the adhesion preventing effect of the inorganic powder is small. The inorganic powder is not adhered to the surface of the coated granular material even if the amount of the inorganic powder exceeds 15 mass%. It is preferable to spread the inorganic powder onto the coated granular material, after the curing of the protection layer, while maintaining the rolling state or flow state of the coated granular material in powder form. It is further preferable to spread the inorganic powder onto the coated granular material in a condition that the protection layer has as much adhesive power as before the curing. It is possible by such treatment operation to stabilize the release of the components because the inorganic power remains on the surface of the protection and does not enter into the coating resin.

2. Production Method of Coated Granular Material

A production method of the coated granular material according to the present invention includes the following steps: holding the water-soluble granular substance in a flow state or rolling state; applying the coating resin A to the water-soluble granular substance in the flow state or rolling state; forming an uncured coating layer of the coating resin A on the surface of the water-soluble granular substance; applying the coating resin B to the uncured coating and thereby forming the coating resin B into a protection layer on the surface of the uncured coating layer; and thermally curing the uncured coating layer and protection layer.

As the thermal curing reaction of the uncured resin liquid proceeds, the thermosetting resin begins gelation, gradually increases adhesion properties and thereby exhibits spinnability. In the further progress of the thermal curing reaction, the thermosetting resin decreases in spinnability, loses its adhesion properties and reaches a cured state. When the resin liquid is applied to the surface of the water-soluble granular substance, particles of the water-soluble granular substance are adhered to each other with increase in the adhesion properties of the thermosetting resin. There are thus formed massive agglomerates of particles of the water-soluble granular substance. The massive agglomerates are loosened in the further progress of the thermal curing reaction. Then, the thermosetting resin is cured on the surface of the water-soluble granular substance as the adhesion properties of the thermosetting resin are lost. In the present invention, the term "unreacted" refers to a state where the resin liquid shows adhesion properties during the progress

8

of the thermal curing reaction.

The present applicant has made researches and resultantly found that the production process of the coated granular material has problems such as not only the above-mentioned pinhole and poor coating formation defects but also defects caused by separation or wear of the coating layer due to adhesion or contact of the adhesion layer with flow- or rolling-state maintaining equipment with increase in the adhesion properties of the coating resin.

The uncured coating layer shows adhesion properties at its surface and, when it reaches a cured state with the progress of the thermal curing reaction, serves as the coating layer. The next layer is laminated on the uncured coating layer in a condition that the uncured coating layer is in an uncured state where the resin liquid has adhesion properties. At the time the uncured coating layer is thermally cured into the coating layer, the surface of the uncured coating layer is covered with the protection layer. By the formation of this protection layer, it is possible to prevent damage caused by separation due to adhesion between the uncured coating layers. Further, there is a need to maintain the flow state or rolling state for a predetermined time for the thermal curing reaction. Damage is more likely to be caused by the equipment on the surface of the coating layer with the progress of the thermal curing reaction. It is possible to prevent such damage on the surface of the coating layer by forming the protection layer. In addition, the uncured coating layer, located inside the protection layer, is cured by heat applied in the thermal curing step of the protection layer. As the uncured coating layer and protection layer are thermally cured at the same time, it is possible to shorten the curing time for improvement in productivity.

In the present production method, the coating resin A is applied to the water-soluble granular substance in the flow state or rolling state to thereby form the coating layer; and the coating resin B is applied after the formation of the coating layer. It is feasible to add the above-mentioned components of the resin liquid independently to the water-soluble granular substance and mix them together in the coating equipment. Alternatively, it is feasible to mix a part or all of the resin liquid components together in advance and add the resulting mixture to the water-soluble granular substance.

The water-soluble granular substance is preheated by hot air etc. for a predetermined time at the time of being held in the flow state or rolling state. The preheating time and preheating temperature of the water-soluble granular substance are set as appropriate in such a manner as to adjust the moisture content of the granular substance to within the range that does not largely affect the coating resin and adjust the temperature of the granular substance to a coating temperature.

The water-soluble granular substance can be held in the flow state by a fluidized bed, spouted bed or the like and can be held in the rolling state by a rotating pan, rotating drum or the like. It is possible to continuously coat the water-soluble granular substance and form the uniform coating on the surface of the water-soluble granular substance by holding the water-soluble granular substance in the flow state or rolling state.

The coating resin A and the coating resin B can be applied by any efficient dispersing/adding means such as spraying or dropping. In particular, two-fluid nozzle spraying process using compressed air is capable of forming good coating and is thus suitably usable as the dispersing/adding means.

The uncured coating layer is formed by, after applying the coating resin to the surface of the water-soluble granular substance, maintaining the rolling state or flow state of the water-soluble granular substance under specific temperature conditions. The formation time and formation temperature of the uncured coating layer etc. are set as appropriate depending on the kind and amount of the coating resin A.

After the formation of the uncured coating layer, the coating resin B is applied to the surface of the uncured coating layer so as to form another coating layer or the protection layer on the uncured coating layer. At this time, the coating resin B is applied in a state where the surface of the uncured coating layer has adhesion properties. In the state where the surface of the uncured coating layer is adhesive, the coating layers are adhered to each other but are not totally combined into one. When the coating resin B is added in such a state, the coating resin B may enter in between the coating layers to thereby cause separation of the coating layers. Further, the water-soluble granular substance may form massive agglomerates in the state where the surface of the uncured coating layer is adhesive. It is thus preferable to add the coating resin B during the time from the instant that the formation of the massive particle agglomerate begins to be observed to the instant that the adhesion properties of the uncured coating layer become lost.

In the thermal curing of the uncured coating layer and protection layer, the heating time, the heating temperature, etc. are set as appropriate depending on the kinds of the uncured coating layer and protection layer.

In the case of using the above-mentioned urethane resin in the uncured coating layer and protection layer, the thermal curing is carried out in an atmosphere where the heating temperature is generally room temperature (about 25°C) to 150°C, more preferably about 40 to 100°C. It is necessary to apply the coating to the granular substance at a relatively low temperature in the case where the granular substance contains a component susceptible to decomposition or modification by heat. For example, the granular substance is preferably coated at a temperature of 90°C or lower in the case where urea is used in the granular substance.

The heating time varies depending on the heating time and kinds and amounts of the coating resins A and B. It suffices to heat the uncured coating layer and protection layer until the adhesion properties of the protection layer become lost. After the adhesion properties of the protection layer are lost, further heating may be done in order to accelerate the urethane reaction. However, too long heating time leads to deterioration in productivity and damage on the coating surface due to wearing of the protection layer by contact with the coating equipment. It is thus necessary to set the heating time such that damage would not occur to the coating surface. For example, the heating time can be set to 10 times or less the time in which the adhesion properties of the protection layer become lost.

As heating means, conductive heat from the coating equipment or hot air is preferably used.

The coated granular material of the present invention can be produced by mass-production equipment. For example, it is feasible to use 100 kg of the water-soluble granular substance in the production method of the present invention. As a matter of course, the production method of the present invention is applicable to any equipment other than the mass-production equipment.

3. Usages

In the present invention, it is possible to control the release pattern of the release components from the coated granular material. The coated granular material of the present invention can be thus suitably used in the form of a coated granular fertilizer obtained by coating a granular fertilizer. In the coated granular fertilizer, there can be used any water-soluble granular fertilizer. Examples of such a granular fertilizer include at least one kind of fertilizer selected from the group consisting of, or composite fertilizers of, urea, ammonium chloride, ammonium sulfate, ammonium nitrate, potassium chloride, potassium sulfate, potassium nitrate, sodium nitrate, potassium phosphate, ammonium phosphate and calcium phosphate and organic granular fertilizers.

The coated granular material of the present invention can also suitably be used in the form of a coated granular pesticide obtained by coating a granular pesticide. In the coated granular pesticide, there can be used any water-soluble granular pesticide. Examples of such a granular pesticide include various insecticides, insect repellents, herbicides, rodenticides and plant growth regulators.

Examples

The present invention will be described in more detail below by way of the following examples. It should be noted that the following examples are intended to illustrate embodiments of the present invention and are not intended to limit the present invention thereto.

[Preparation of Resin Liquids]

Resin liquids A to G were prepared as follows.

[Resin Liquid A]

The resin liquid A was prepared by mixing the following components 1 and 2 in such a manner that isocyanate groups/hydroxyl groups = 1.0.

(Component 1) MDI-modified castor oil (i.e. isocyanate-terminal prepolymer containing 19 mass% of isocyanate groups based on the total mass of the prepolymer by mixing of castor oil with excessive MDI).
(Component 2) Mixed liquid in which the following ingredients *a* and *b* were mixed at a hydroxyl molar ratio of 8:2.

    *a*: Castor oil (hydroxyl value: 160 mgKOH/g).
    *b*: Propylene oxide adduct of ethylenediamine (propylene oxide/nitrogen atom ratio: 2.2, hydroxyl value: 760 mgKOH/g).

[Resin Liquid B]

The resin liquid B was prepared by mixing the following components 1 and 2 in such a manner that isocyanate groups/hydroxyl groups = 0.8.

(Component 1) The same MDI-modified castor oil as the component 1 of the resin liquid A.
(Component 2) The same mixed liquid as the component 2 of the resin liquid A.

[Resin Liquid C]

The resin liquid C was prepared by mixing the following components 1 and 2 in such a manner that isocyanate groups/hydroxyl groups = 0.9.

(Component 1) The same MDI-modified castor oil as the component 1 of the resin liquid A.
(Component 2) The same mixed liquid as the component 2 of the resin liquid A.

[Resin Liquid D]

The resin liquid D was prepared by mixing the following components 1 and 2 in such a manner that isocyanate groups/hydroxyl groups = 0.6.

(Component 1) The same MDI-modified castor oil as the component 1 of the resin liquid A.
(Component 2) The same mixed liquid as the component 2 of the resin liquid A.

[Resin Liquid E]

The resin liquid E was prepared by mixing the following components 1 and 2 in such a manner that isocyanate groups/hydroxyl groups = 0.7.

(Component 1) The same MDI-modified castor oil as the component 1 of the resin liquid A.
(Component 2) The same mixed liquid as the component 2 of the resin liquid A.

[Resin Liquid F]

The resin liquid F was prepared by mixing the following components 1 and 2 in such a manner that isocyanate groups/hydroxyl groups = 0.63.

(Component 1) The same MDI-modified castor oil as the component 1 of the resin liquid A.

(Component 2) The same mixed liquid as the component 2 of the resin liquid A.

[Resin Liquid G]

The resin liquid G was prepared by mixing the following components 1 and 2 in such a manner that isocyanate groups/hydroxyl groups = 0.78.

(Component 1) The same MDI-modified castor oil as the component 1 of the resin liquid A.

(Component 2) The same mixed liquid as the component 2 of the resin liquid A.

[Production of Coated Granular Materials]

Using the above-prepared resin liquids, coated granular materials were produced by the following procedures. The production conditions of Examples and Comparative Examples are shown in TABLE 1.

TABLE 1

| | Isocyanate groups/hydroxyl groups | | Coverage rate (mass%) | | | Amount (kg) of urea coated |
|---|---|---|---|---|---|---|
| | Coating layer | Protection layer | Coating layer | Protection layer | Total | |
| Example 1 | 0.80 | 1.00 | 3.0 | 0.5 | 3.5 | 100 |
| Example 2 | 0.60 | 1.00 | 5.4 | 0.6 | 6.0 | 100 |
| Example 3 | 0.63 | 0.78 | 5.4 | 0.6 | 6.0 | 100 |
| Comparative Example 1 | 1.00 | 1.00 | 3.0 | 0.5 | 3.5 | 100 |

(continued)

| | Isocyanate groups/hydroxyl groups | | Coverage rate (mass%) | | | Amount (kg) of urea coated |
|---|---|---|---|---|---|---|
| | Coating layer | Protection layer | Coating layer | Protection layer | Total | |
| Comparative Example 2 | 0.90 | 0.90 | 3.0 | 0.5 | 3.5 | 100 |
| Comparative Example 3 | 0.80 | 0.80 | 3.0 | 0.5 | 3.5 | 100 |
| Comparative Example 4 | 0.70 | 0.70 | 5.4 | 0.6 | 6.0 | 100 |

The total coverage rate was herein determined by the equation: {(mass of coating layer + mass of protection layer)/mass of coated granular fertilizer material} $\times$ 100 upon reduction of the coated granular fertilizer material.

[Example 1]

In a drum-type rolling coating machine of 1.4 m in diameter, 100 kg of granular urea (particle size: 2.5 to 4.0 mm) was placed. While rolling the granular urea at 7 rpm in the machine, the temperature of the granular urea was held at 70°C by a hot-air generator. Subsequently, the above-prepared resin liquid B was sprayed (applied) as the coating resin A (1603 g in total, corresponding to 1.5 mass%) by a two-fluid nozzle into the machine over 30 seconds for the formation of a first uncured coating layer. The resulting coated granular urea particles began adhering to one another after 2.5 minutes from the addition of the coating resin A, and then, developed massive agglomerates after 3 minutes from the addition of the coating resin A. After a lapse of 3.5 minutes from the addition of the coating resin A, the adhesion properties of the coating resin began to decrease. Then, the massive agglomerates were loosened even though there was strong adhesion between the coated granular fertilizer particles. For the formation of a second uncured coating layer, the same amount of the same coating resin A (1.5 mass%) as that of the first uncured coating layer was sprayed by the two-fluid nozzle into the machine over 30 seconds after 3.5 minutes from the spraying of the first uncured coating layer. The above-prepared resin liquid A was further sprayed as the coating resin B (534 g in total, corresponding to 0.5 mass%), for the formation of a protection layer, into the machine over 10 seconds after 3.5 minutes from the spraying of the second uncured coating layer. After a lapse of 7 minutes from the spraying of the coating resin B, the adhesion properties of the protection layer were almost lost so that there occurred no adhesion between the coated granular urea particles. For further acceleration of the curing reaction of the thermosetting resin, the coated granular urea particles were kept rolled for 30 minutes after the spraying of the coating resin B so as to thereby cure the coatings on the granular urea particles. The resulting coated granular urea was cooled to room temperature (about 25°C). In this way, the target coated granular fertilizer material was obtained. The coverage rate of the coated granular fertilizer material was 3.5 mass%.

[Example 2]

In a drum-type rolling coating machine of 1.4 m in diameter, 100 kg of granular urea (particle size: 2.5 to 4.0 mm) was placed. While rolling the granular urea at 7 rpm in the machine, the temperature of the granular urea was held at 70°C by a hot-air generator. Subsequently, 63 g of water-absorbing resin (cross-linked acrylate polymer of 25 $\mu$m in average particle size; "ST-500MPSA" available from Sanyo Chemical Industries Ltd.) and the above-prepared resin liquid D were sprayed as the coating resin A (1317 g in total, corresponding to 1.2 mass%) into the machine over 30 seconds for the formation of a first uncured coating layer. For the formation of a second uncured coating layer, the same amount of the same coating resin A (1.2 mass%) as that of the first uncured coating layer was sprayed into the machine over 30 seconds after 3 minutes from the spraying of the first uncured coating layer. After 3.5 minutes from the spraying of the second uncured coating layer, the above-prepared resin liquid D was sprayed as the coating resin A (1647 g in total, corresponding to 1.5 mass%) into the machine over 30 seconds for the formation of a third uncured coating layer. Then, the same amount of the same coating resin A (1.5 mass%) as that of the third uncured coating layer was sprayed into the machine over 30 seconds for the formation of a fourth uncured coating layer. The above-prepared resin liquid A was further sprayed as the coating resin B (659 g in total, corresponding to 0.6 mass%) into the machine over 10 seconds for the formation of a protection layer. After a lapse of 7 minutes from the spraying of the coating resin B, the adhesion properties of the protection layer were almost lost so that there occurred no adhesion between the coated granular urea particles. For further acceleration of the curing reaction of the thermosetting resin, the coated granular urea particles were kept rolled for 30 minutes after the spraying of the coating resin B so as to thereby cure the coatings on the granular urea particles. The resulting coated granular urea was cooled to room temperature (about 25°C). In this way, the target coated granular fertilizer material was obtained. The coverage rate of the coated granular fertilizer material was 6.0 mass%.

[Example 3]

The coated granular fertilizer material was produced in the same manner as in Example 2, except for using the resin liquid F as the coating resin (650 g in total, corresponding to 0.6 mass%) for the formation of the third and fourth uncured coating layers and using the resin liquid G as the coating resin (1674 g in total, corresponding to 1.5 mass%) for the formation of the protection layer. The coverage rate was 6.0 mass%.

[Comparative Example 1]

The coated granular fertilizer material was produced in the same manner as in Example 1, except for using the resin liquid A as the coating resin (1603 g in total, corresponding to 1.5 mass%) for the formation of the first and second uncured coating layers and using the resin liquid A as the coating resin (534 g in total, corresponding to 0.5 mass%) for the formation of the protection layer. The coverage rate was 3.5 mass%.

[Comparative Example 2]

The coated granular fertilizer material was produced in the same manner as in Example 1, except for using the resin liquid C as the coating resin (1603 g in total, corresponding to 1.5 mass%) for the formation of the first and second uncured coating layers and using the resin liquid C as the coating resin (534 g in total, corresponding to 0.5 mass%) for the formation of the protection layer. The coverage rate was 3.5 mass%.

[Comparative Example 3]

The coated granular fertilizer material was produced in the same manner as in Example 1, except for using the resin liquid B as the coating resin (1603 g in total, corresponding to 1.5 mass%) for the formation of the first and second uncured coating layers and using the resin liquid B as the coating resin (534 g in total, corresponding to 0.5 mass%) for the formation of the protection layer. The coverage rate was 3.5 mass%.

[Comparative Example 4]

The coated granular fertilizer material was produced in the same manner as in Example 2, except for spraying the resin liquid E, in place of the resin liquid D, into the machine for the formation of the first to fourth uncured coating layers and spraying the resin liquid E as the coating resin (659 g in total, corresponding to 0.6 mass%) for the formation of a fifth layer as the protection layer. The coverage rate was 6.0 mass%.

[Performance Evaluation of Coated Granular Materials]

The above-produced coated granular materials were tested for the performance such as yield rate and release rate by the following procedures. The test results of Examples and Comparative Examples are shown in TABLE 2.

TABLE 2

| | Isocyanate groups/ hydroxyl groups | | Yield rate (%) | Release rate (mass%) | | | | | | |
|---|---|---|---|---|---|---|---|---|---|---|
| | Coating layer | Protection layer | | 3 days | 7 days | 14 days | 21 days | 28 days | 42 days | 56 days |
| Example 1 | 0.80 | 1.00 | 80 | 11 | 17 | 35 | 62 | 72 | 82 | 88 |
| Example 2 | 0.60 | 1.00 | 98 | 6 | 23 | 73 | 90 | 95 | - | - |
| Example 3 | 0.63 | 0.78 | 93 | 12 | 33 | 72 | 88 | 93 | - | - |

(continued)

| | Isocyanate groups/ hydroxyl groups | | Yield rate (%) | Release rate (mass%) | | | | | | |
| --- | --- | --- | --- | --- | --- | --- | --- | --- | --- | --- |
| | Coating layer | Protection layer | | 3 days | 7 days | 14 days | 21 days | 28 days | 42 days | 56 days |
| Comparative Example 1 | 1.00 | 1.00 | 83 | 10 | 14 | 20 | 27 | 34 | 54 | 75 |
| Comparative Example 2 | 0.90 | 0.90 | 71 | 20 | 26 | 33 | 44 | 61 | 79 | 84 |
| Comparative Example 3 | 0.80 | 0.80 | 56 | 33 | 43 | 56 | 73 | 81 | 88 | 91 |
| Comparative Example 4 | 0.70 | 0.70 | 83 | 22 | 42 | 71 | 88 | 93 | - | - |

[Yield Rate Evaluation Test]

First, 10 g of the reduced coated granular fertilizer material was sampled. A previously diluted solution of ink ("S-1 (red)" available from Shachihata Inc.) (2.5 g/250 ml pure water) was added to the sampled granular fertilizer material until the granular fertilizer material was totally immersed in the diluted ink solution. The granular fertilizer material was left still in the diluted ink solution at 25°C for 1 hour, and then, recovered by filtration. Subsequently, the ink adhered to the coated granular fertilizer material was washed away with water. The ink-colored coated granular fertilizer material and the resin coating through which the release of the fertilizer components was completed were removed. The yield rate was determined based on the mass of the uncolored coated granular fertilizer material (yield rate = (mass of uncolored coated granular fertilizer material) g/10 g×100).

[Release Rate Evaluation Test]

The release test was performed on the reduced coated granular fertilizer material. The results of the release test are shown in TABLE 2. In the release test, 10 g of the reduced coated granular fertilizer material was sampled and dropped into 200 cc of ion-exchanged water. The resulting mixture was stored in a thermostat of 25°C and extracted after a lapse of a predetermined time. The amount of urea released into the water was quantified. In TABLE 2, the release rate (mass%) of the urea after a lapse of 3 days, 7 days, 14 days, 21 days, 28 days, 42 days and 56 days is indicated.

As is seen from comparison of Example 1 and Comparative Example 3 where the isocyanate to hydroxyl molar ratio of the coating layer was the same, the initial release was significantly limited by setting the isocyanate to hydroxyl molar ratio of the protection layer to be greater than that of the coating layer. It is also seen from comparison of Example 1 and Comparative Example 2 that, although the initial release of Example 1 was limited to a lower level than that of Comparative Example 2, there was a tendency that the release rate of Example 1 became higher with the passage of days. It is further seen from comparison of Example 1 and Comparative Example 1 that Comparative Example 1 had a release rate of lower than 80 mass% after the lapse of 56 days and thus did not achieve a short-term release pattern even though the initial release of Example 1 and the initial release of Comparative Example 1 were at equivalent levels. Each of Example 1 and Comparative Example 1, in which the isocyanate to hydroxyl molar ratio of the protection layer was set to 1.0, had a high yield rate of 80 % or higher as is seen from comparison of Example 1 and Comparative Examples 1 to 3. By these results, it has been shown that it is possible to prevent defects by setting the suitable isocyanate to hydroxyl molar ratio of the protection layer.

Each of Example 2, Example 3 and Comparative Example 4, in which the water-absorbing resin was sprayed for further increase of the release rate, had a short-term release pattern. As the isocyanate to hydroxyl molar ratio of the coating layer was smaller in Examples 2 and 3 than in Comparative Example 4, it was expected that the initial release limiting function of Examples 2 and 3 would be inferior to that of Comparative Example 4. Contrary to such expectations, it was possible to obtain a greater initial release limiting effect in Examples 2 and 3 than in Comparative Example 4 by increasing the isocyanate to hydroxyl molar ratio of the protection layer even though the isocyanate to hydroxyl molar ratio of the coating layer was small. Further, the initial release limiting effect increased with the difference in molar ratio between the coating layer and the protection layer as is seen from comparison of Examples 2 and 3.

As described above, it is possible that the coated granular material of the present invention can attain a short-term release pattern, limit an initial release of components and maintain good quality by forming the protection layer on the coating layer and controlling the isocyanate to hydroxyl molar ratio of the protection layer as appropriate. It is further possible in the suitable production method of the coated granular material to reduce the thermal curing time of the coating for improvement in productivity.

Although the present invention has been described with reference to the above embodiments, various modifications and variations of the above embodiments can be made based on the knowledge of those skilled in the art without departing from the scope of the present invention. All of the publications cited in the present specification, such as prior art documents and patent documents e.g. published patents and patent applications, are herein incorporated by reference.

**Claims**

1.  A coated granular material, comprising:

    a water-soluble granular substance;
    a coating layer applied to at least a surface of the water-soluble granular substance; and
    a protection layer applied to the coating layer,
    **characterized in that**:

       the coating layer comprises a thermosetting resin A formed from a resin liquid having a molar ratio A of isocyanate groups to hydroxyl groups of 0.5 to 0.9;
       the protection layer comprises a thermosetting resin B formed from a resin liquid having a molar ratio B of isocyanate groups to hydroxyl groups of 0.75 to 2.0;
       the thermosetting resin A of the coating layer and the thermosetting resin B of the protection layer contain the same components at different mixing ratios such that the molar ratio B of the protection layer is greater than the molar ratio A of the coating layer; and
       a difference between the molar ratio A and the molar ratio B is 0.1 or more.

2.  The coated granular material according to claim 1, wherein the protection layer has a coverage rate of 0.2 to 2 mass% as determined by the equation: (mass of protection layer/ mass of coated granular material)$\times$100

3.  The coated granular material according to claim 1 or 2, wherein each of the thermosetting resin A and the thermosetting resin B is an urethane resin obtained from an aromatic polyisocyanate, a polyol and an amine compound or amine polyol.

4.  The coated granular material according to any one of claims 1 to 3, wherein the coating layer contains a water-absorbing resin.

5.  The coated granular material according to any one of claims 1 to 4, wherein the water-soluble granular substance is a water-soluble fertilizer.

6.  The coated granular material according to any one of claims 1 to 4, wherein the water-soluble granular substance is a water-soluble pesticide.

7.  A method for producing the coated granular material according to any one of claims 1 to 6, the method comprising:

    holding a water-soluble granular substance in a flow state or rolling state;
    applying a coating resin to the water-soluble granular substance in the flow state or rolling state;
    forming an uncured coating layer of the coating resin on a surface of the water-soluble granular substance;
    forming a protection layer on a surface of the uncured coating layer; and
    thermally curing the uncured coating layer and protection layer.

**Patentansprüche**

1.  Beschichtetes körniges Material, umfassend:

eine wasserlösliche körnige Substanz;
eine auf zumindest eine Oberfläche der wasserlöslichen körnigen Substanz aufgebrachte Deckschicht; und
eine auf die Deckschicht aufgebrachte Schutzschicht,

**dadurch gekennzeichnet, dass**:

die Deckschicht ein wärmehärtendes Harz A umfasst, welches gebildet ist aus einer Harzflüssigkeit mit einem molaren Verhältnis A von Isocyanatgruppen zu Hydroxylgruppen von 0,5 bis 0,9;
die Schutzschicht ein wärmehärtendes Harz B umfasst, welches gebildet ist aus einer Harzflüssigkeit mit einem molaren Verhältnis B von Isocyanatgruppen zu Hydroxylgruppen von 0,75 bis 2,0;
das wärmehärtende Harz A der Deckschicht und das wärmehärtende Harz B der Schutzschicht die gleichen Komponenten in solchen unterschiedlichen Mischungsverhältnissen enthalten, dass das molare Verhältnis B der Schutzschicht größer ist als das molare Verhältnis A der Deckschicht; und
eine Differenz zwischen dem molaren Verhältnis A und dem molaren Verhältnis B 0,1 oder mehr beträgt.

2. Beschichtetes körniges Material nach Anspruch 1, wobei die Schutzschicht einen Bedeckungsgrad von 0,2 bis 2 Massenprozent aufweist, der bestimmt ist durch die Gleichung: (Masse der Schutzschicht/Masse des beschichteten körnigen Materials) $\times$ 100

3. Beschichtetes körniges Material nach Anspruch 1 oder 2, wobei jedes von dem wärmehärtenden Harz A und dem wärmehärtenden Harz B ein Urethanharz ist, das hergestellt ist aus einem aromatischen Polyisocyanat, einem Polyol und einer Aminverbindung oder einem Aminpolyol.

4. Beschichtetes körniges Material nach einem der Ansprüche 1 bis 3, wobei die Deckschicht ein wasserabsorbierendes Harz enthält.

5. Beschichtetes körniges Material nach einem der Ansprüche 1 bis 4, wobei die wasserlösliche körnige Substanz ein wasserlöslicher Dünger ist.

6. Beschichtetes körniges Material nach einem der Ansprüche 1 bis 4, wobei die wasserlösliche körnige Substanz ein wasserlösliches Pestizid ist.

7. Verfahren zur Herstellung des beschichteten körnigen Materials nach einem der Ansprüche 1 bis 6, wobei das Verfahren umfasst:

das Halten einer wasserlöslichen körnigen Substanz in einem fließenden oder rollenden Zustand;
das Aufbringen eines Deckharzes auf die wasserlösliche körnige Substanz in dem fließenden oder rollenden Zustand;
das Bilden einer ungehärteten Deckschicht aus dem Deckharz auf einer Oberfläche der wasserlöslichen körnigen Substanz;
das Bilden einer Schutzschicht auf einer Oberfläche der ungehärteten Deckschicht; und
das Wärmehärten der ungehärteten Deckschicht und der Schutzschicht.

## Revendications

1. Matériau granulaire revêtu, comprenant :

une substance granulaire soluble dans l'eau ;
une couche de revêtement appliquée sur au moins une surface de la substance granulaire soluble dans l'eau ; et
une couche de protection appliquée sur la couche de revêtement,
**caractérisé en ce que** :

la couche de revêtement comprend une résine thermodurcissable A formée à partir d'une résine liquide ayant un rapport molaire A des groupes isocyanate sur les groupes hydroxyle de 0,5 à 0,9 ;
la couche de protection comprend une résine thermodurcissable B formée à partir d'une résine liquide ayant un rapport molaire B des groupes isocyanate sur les groupes hydroxyle de 0,75 à 2,0 ;
la résine thermodurcissable A de la couche de revêtement et la résine thermodurcissable B de la couche de protection contiennent les mêmes composants sous des rapports de mélange différents de telle façon que le rapport molaire B de la couche de protection est plus élevé que le rapport molaire A de la couche de revêtement ; et
une différence entre le rapport molaire A et le rapport molaire B est de 0,1 ou plus.

2. Matériau granulaire revêtu selon la revendication 1, dans lequel la couche de protection présente un taux de couverture de 0,2 à 2 % en masse, tel que déterminé par l'équation :

(masse couche de protection/masse matériau granulaire revêtu) x 100.

3. Matériau granulaire revêtu selon la revendication 1 ou 2, dans lequel chacune de la résine thermodurcissable A et de la résine thermodurcissable B est une résine uréthane obtenue à partir d'un polyisocyanate aromatique, d'un polyol et d'un composé amine ou d'un polyol amine.

4. Matériau granulaire revêtu selon l'une quelconque des revendications 1 à 3, dans lequel la couche de revêtement contient une résine absorbant l'eau.

5. Matériau granulaire revêtu selon l'une quelconque des revendications 1 à 4, dans lequel la substance granulaire soluble dans l'eau est un fertilisant soluble dans l'eau.

6. Matériau granulaire revêtu selon l'une quelconque des revendications 1 à 4, dans lequel la substance granulaire soluble dans l'eau est un pesticide soluble dans l'eau.

7. Procédé pour produire le matériau granulaire revêtu selon l'une quelconque des revendications 1 à 6, le procédé comprenant les étapes consistant à :

maintenir une substance granulaire soluble dans l'eau dans un état en écoulement ou dans un état en roulement ;
appliquer une résine de revêtement sur la substance granulaire soluble dans l'eau dans l'état en écoulement ou dans l'état en roulement ;
former une couche de revêtement non durcie de la résine de revêtement sur une surface de la substance granulaire soluble dans l'eau ;
former une couche de protection sur une surface de la couche de revêtement non durcie ; et
faire durcir par voie thermique la couche de revêtement non durcie et la couche de protection.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10265288 B
- JP 2005041708 A
- JP 2007277429 A
- JP H9208355 B
- JP H9202683 B
- US 6358295 B1
- EP 0867422 A2
- JP 2003277178 A
- AU 704560 B2
- AU 695280 B2
- US 2003033843 A1
- EP 0847691 A1